# EUROPÄISCHE PATENTSCHRIFT

(11) **EP 4 263 305 B1**
(45) Veröffentlichungstag und Bekanntmachung des Hinweises auf die Patenterteilung: **25.09.2024**
(21) Anmeldenummer: 21820109.3
(22) Anmeldetag: 25.11.2021
(51) Int. Cl.: B60T 13/74, F16D 51/20, F16D 65/52, F16D 65/56

(54) **BREMSEINRICHTUNG**
BRAKING DEVICE
DISPOSITIF DE FREINAGE

(30) Priorität: 16.12.2020 DE 102020216023
(43) Veröffentlichungstag der Anmeldung: 25.10.2023
(73) Patentinhaber: Continental Automotive Technologies GmbH, 30175 Hannover (DE)
(72) Erfinder: PETZOLD, Falk, 60488 Frankfurt am Main (DE); VEY, Christian, 60488 Frankfurt am Main (DE); KRUSE, Martin, 60488 Frankfurt am Main (DE); GÄDKE, Martin, 60488 Frankfurt am Main (DE); HOFFMANN, Jens, 60488 Frankfurt am Main (DE); BACH, Uwe, 60488 Frankfurt am Main (DE)
(74) Vertreter: Continental Corporation
(86) Internationale Anmeldenummer: PCT/DE2021/200204
(87) Internationale Veröffentlichungsnummer: WO 2022/128010

(56) Entgegenhaltungen:
- WO-A2-2015/101486
- DE-U1- 202021 103 308

## Beschreibung

Die Erfindung betrifft eine Bremseinrichtung für ein Kraftfahrzeug, mit einem Bremsorgan zur Erzeugung eines Reibschlusses mit einem rotierenden Bauteil und mit einem in zwei Bewegungsrichtungen antreibbaren, das Bremsorgan auf das rotierende Bauteil zu und von dem rotierenden Bauteil weg bewegenden Aktuator, und mit einer Nachstelleinrichtung zum Ausgleich eines Verschleißes der den Reibschluss erzeugenden Bauteile.

Die nicht vorveröffentlichte DE 20 2021 103 308 U1 bezieht sich auf eine kombinierte Trommelbremse aufweisend mehrere Aktuatorsysteme die hybridisiert vorliegen und funktional separiert sind, umfassend eine hydraulische Betriebsbremsaktuatoreinheit mit Kolben zwecks hydraulischer Betriebsbremsfunktion und aufweisend eine elektrische Feststellbremsaktuatoreinheit mit Kegelradgetriebe für eine elektromechanische Feststellbremsfunktion. Weiterhin ist zwecks Reibverschleißkompensation eine konstant bemessene Spaltkalibrierung anhand der elektrischen Feststellbremsaktuatoreinheit erstrebenswert angegeben.

Bremseinrichtungen sind beispielsweise aus der WO 2015 101 486 A2 bekannt. Die Nachstelleinrichtung ist als separates Bauteil neben dem Aktuator in die Spreizeinrichtung der Bremseinrichtung integriert und verhindert, dass ein Bremspedalweg oder ein Weg des Aktuators mit beim Verschleiß der Bremsbeläge zunehmendem Luftspiel vergrößert wird. Bei Bedarf kann die Nachstelleinrichtung nachgestellt werden.

Der Erfindung liegt das Problem zugrunde, eine Bremseinrichtung der eingangs genannten Art so weiter zu bilden, dass sie besonders einfach aufgebaut ist und eine aufwändige Nachstellung der Bremsbeläge vermeidet.

Dieses Problem wird erfindungsgemäß dadurch gelöst, dass die Nachstelleinrichtung in dem Bauteil des Aktuators angeordnet ist und dass der Aktuator ausgehend von einer mittleren Grundstellung in der einen Antriebrichtung zum Antrieb eines Spreizaktors und ausgehend von der Grundstellung in der entgegengesetzten Antriebsrichtung zum Antrieb der Nachstelleinrichtung ausgebildet ist.

Durch diese Gestaltung wird die Montage eines zusätzlichen Bauteils der Nachstelleinrichtung vermieden, weil die Nachstelleinrichtung zusammen mit den übrigen Bauteilen des Aktuators montiert wird. Dabei lassen sich wahlweise die Nachstelleinrichtung oder der Spreizaktor durch eine entsprechende Ansteuerung des Aktuators ansteuern. Damit ist die Bremseinrichtung besonders einfach aufgebaut und ermöglicht eine besonders einfache Nachstellung der Bremsbelege bei Verschleiß. Die beschriebenen Antriebsrichtungen des Aktuators können dabei von einem Winkel oder einem axialen Weg festgelegt werden. Die Bremseinrichtung kann nahezu beliebig, beispielsweise als Simplex oder Duo Servo Bremse ausgebildet sein.

Die Bremseinrichtung hat gemäß einer anderen vorteilhaften Weiterbildung der Erfindung eine besonders geringe Verzögerung der Erzeugung des Reibschlusses nach der Ansteuerung des Aktuators, wenn die Grundstellung die mit Energie unbeaufschlagte Stellung des Aktuators ist.

Die Grundstellung und der Antrieb in beide Bewegungsrichtungen lassen sich gemäß einer anderen vorteilhaften Weiterbildung der Erfindung einfach festlegen, wenn der Aktuator einen Elektromotor hat.

Die Bremseinrichtung lässt sich gemäß einer anderen vorteilhaften Weiterbildung der Erfindung besonders einfach fertigen, wenn der Aktuator ein Gehäuse mit darin angeordneten Druckstücken zur Abstützung der Bremsorgane und der Nachstelleinrichtung hat. Hierdurch lässt sich der Aktuator mit den Druckstücken einfach zwischen den Bremsorganen montieren. Hierbei ist gleichzeitig die Nachstelleinrichtung montiert.

Der Antrieb der Nachstelleinrichtung und der Druckstücke gestaltet sich gemäß einer anderen vorteilhaften Weiterbildung der Erfindung konstruktiv besonders einfach, wenn der Elektromotor zum Antrieb einer Antriebshülse ausgebildet ist und wenn die Antriebshülse in der einen Drehrichtung zur Ansteuerung des Spreizaktors und in der anderen Drehrichtung zur Ansteuerung der Nachstelleinrichtung ausgebildet ist.

Der Spreizaktor gestaltet sich gemäß einer anderen vorteilhaften Weiterbildung der Erfindung konstruktiv besonders einfach, wenn der Spreizaktor zwei gegeneinander verdrehbare Rampenscheiben hat, wenn die Rampenscheiben mittelbar an den Druckstücken abgestützt sind und wenn die Form der Rampenscheiben bei einer Verdrehung gegeneinander zu ihrer axialen Vergrößerung ausgebildet ist. Die Rampenscheiben können beispielsweise an ihren Stirnseiten geneigte Nuten zur Aufnahme von Rollkörpern aufweisen, so dass die Rollkörper darin abrollen und den Abstand der Rampenscheiben zueinander vergrößern.

Zur weiteren Vereinfachung des Aufbaus des Spreizaktors trägt es gemäß einer anderen vorteilhaften Weiterbildung der Erfindung bei, wenn der Aktuator eine über ein Gewinde mit einer Achse verbundene und innerhalb des Gehäuses axial verschiebbare Antriebshülse hat und wenn zumindest eines der Bauteile der Achse oder der Antriebshülse die Druckstücke mittelbar oder unmittelbar abstützt.

Die Nachstelleinrichtung gestaltet sich gemäß einer anderen vorteilhaften Weiterbildung der Erfindung konstruktiv besonders einfach, wenn die Nachstelleinrichtung eine über ein Nachstellgewinde auf der Achse aufgedrehte Nachstellmutter hat und wenn die Nachstellmutter in der Grundstellung formschlüssig oder kraftschlüssig gegen Verdrehen gesichert ist.

Das Gewinde könnte beispielsweise als Trapezgewinde ausgebildet sein. Die Ansteuerungen des Spreizaktors und der Nachstelleinrichtung gestalten sich gemäß einer anderen vorteilhaften Weiterbildung der Erfindung besonders reibungsarm, wenn das Gewinde der Antriebshülse auf der Achse als Kugelgewindetrieb ausgebildet ist.

Der Aktuator gestaltet sich gemäß einer anderen vorteilhaften Weiterbildung der Erfindung besonders kompakt, wenn die Nachstellmutter im Kraftfluss zwischen der Achse und dem einen Druckstück angeordnet ist. Hierdurch kann die gesamte Nachstelleinrichtung bei der Ansteuerung des Spreizaktors verschoben werden, ohne dass die Nachstelleinrichtung verstellt wird.

Die gegen Verdrehung gesicherte Halterung der Nachstellmutter gestaltet sich gemäß einer anderen vorteilhaften Weiterbildung der Erfindung konstruktiv besonders einfach, wenn die Nachstellmutter eine Rasterung mit einer Rastscheibe oder mit einer Nachstellfeder hat.

Die Abstützung der Nachstellfeder gestaltet sich gemäß einer anderen vorteilhaften Weiterbildung der Erfindung besonders einfach, wenn ein Nachstellkäfig die Nachstellmutter mit einem Ende umgreift und mit dem anderen Ende die Nachstellfeder abstützt.

Die Erfindung lässt zahlreiche Ausführungsformen zu. Zur weiteren Verdeutlichung ihres Grundprinzips sind mehrere davon in der Zeichnung dargestellt und werden nachfolgend beschrieben. Diese zeigt in
- Fig.1: schematisch eine als Trommelbremse ausgebildete Bremseinrichtung,
- Fig.2: ein Kraft-Weg-Diagramm eines Aktuators der Bremseinrichtung aus Figur 1,
- Fig.3: eine Schnittdarstellung durch eine erste Ausführungsform des Aktuators,
- Fig.4: eine Schnittdarstellung durch den Aktuator aus Figur 3 entlang der Linie IV - IV.
- Fig.5: eine Schnittdarstellung durch eine weitere Ausführungsform des Aktuators,
- Fig.6: eine Schnittdarstellung durch eine weitere Ausführungsform des Aktuators,
- Fig.7: den Aktuator aus Figur 6 bei der Ansteuerung eines Spreizaktors,
- Fig.8: den Aktuator aus Figur 6 bei der Ansteuerung einer Nachstelleinrichtung,
- Fig.9: perspektivisch eine Nachstellmutter einer Nachstelleinrichtung des Aktuators aus Figur 6
- Fig. 10: die Nachstellmutter aus Figur 7 in einer weiteren Darstellung,
- Fig.11: einen Teilbereich der Nachstelleinrichtung aus Figur 6 in einer vergrößerten Schnittdarstellung.

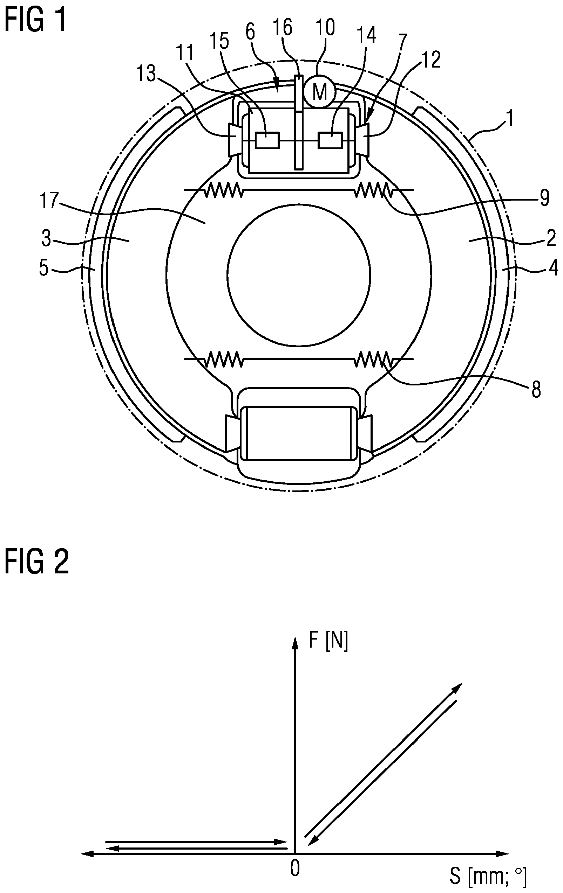

Figur 1 zeigt die Bauteile einer als Trommelbremse ausgebildeten Bremseinrichtung eines Kraftfahrzeuges. Die Bremseinrichtung hat eine drehbar gelagerte Bremstrommel 1. Die Bremstrommel 1 umschließt zwei als Bremsbacken ausgebildete Bremsorgane 2, 3 mit Reibbelägen 4, 5. Die Bremsbacken 2, 3 lassen sich von einer von einem Aktuator 6 antreibbaren Spreizeinrichtung 7 gegen die Bremstrommel 1 bewegen, um ein Reibmoment zu erzeugen. In dem dargestellten Ausführungsbeispiel spannen Zugfedern 8, 9 die Bremsbacken 2, 3 gegen den Aktuator 6 und ermöglichen damit deren Rückbewegung von der Bremstrommel 1. Der Aktuator 6 hat einen in beide Drehrichtungen antreibbaren Elektromotor 10 und ein Gehäuse 11 zur Führung zweier sich an den Bremsbacken 2, 3 abstützenden Druckstücke 12, 13. Innerhalb des Gehäuses 11 sind ein Spreizaktor 14 zum Antrieb der Spreizeinrichtung 7 und eine Nachstelleinrichtung 15 angeordnet. Die Nachstelleinrichtung 15 stellt die Position der Druckstücke 12, 13 ein und ermöglicht damit den Ausgleich des Verschleißes der Reibbeläge 4, 5. Ein von dem Elektromotor 10 angetriebenes Zahnrad 16 dringt in das Gehäuse 11 mit den Druckstücken 12, 13 ein. Das Gehäuse 11 ist schwimmend auf einer Tragplatte 17 gelagert.

Figur 2 zeigt ein Kraft/Weg Diagramm des Aktuators aus Figur 1. Hierbei ist zu erkennen, dass der Aktuator 6 aus Figur 1 im ungesteuerten Grundzustand eine mit "0" gekennzeichnete Nullstellung einnimmt, in der weder die Druckstücke 12, 13 mittels des Spreizaktors 14 mit Kraft beaufschlagt werden, noch die Nachstelleinrichtung 15 angesteuert wird. Treibt man ausgehend von der Nullstellung den Elektromotor 10 in die eine Drehrichtung an, wird die Nachstelleinrichtung 15 angesteuert. Treibt man ausgehend von der Nullstellung den Elektromotor in die andere Drehrichtung an, werden die Druckstücke 12, 13 von dem Spreizaktor 14 auseinander bewegt und leiten eine Kraft F in die Spreizeinrichtung ein.

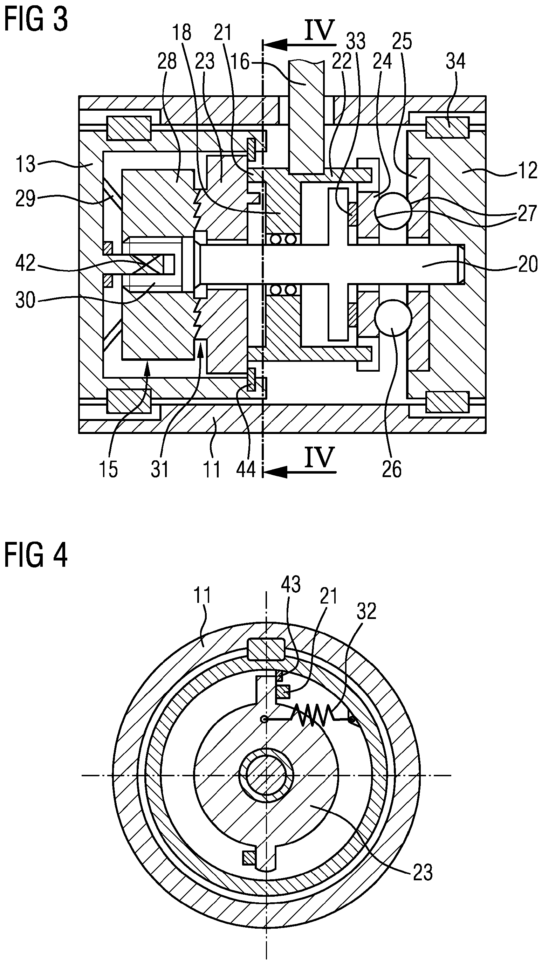

Figur 3 zeigt schematisch eine Schnittdarstellung durch das Gehäuse 11 des Aktuators 6 mit den darin unverdrehbar und axial verschieblich angeordneten Druckstücken 12, 13. Das von dem Elektromotor 10 aus Figur 1 angetriebene Zahnrad 16 ist im Teilschnitt dargestellt. Der Aktuator 6 hat an seinen Enden die Druckstücke 12, 13 zur Abstützung der in Figur 1 dargestellten Bremsorgane 2, 3 und innerhalb des Gehäuses 11 eine von dem Zahnrad 16 angetriebene Antriebshülse 18. Die Antriebshülse 18 ist auf einer Achse 20 gelagert und stützt sich über erste Mitnehmer 21 an einer Rastscheibe 23 und über zweite Mitnehmer 22 an einer ersten Rampenscheibe 24 ab. Die Lagerung der Antriebshülse 18 auf der Achse 20 kann über ein Radiallager oder eine Gleitbuchse erfolgen. In dem dargestellten Ausführungsbeispiel ist die Antriebshülse 18 verschiebbar. Alternativ kann die Antriebshülse 18 beidseitig mit einem nicht dargestellten Sicherungsring axial auf der Achse 20 fixiert werden. Die Mitnehmer 21, 22 stehen als auf beiden Seiten der Achse 20 angeordnete Flügelpaare von der Antriebshülse 18 ab. Hierdurch werden Querkräfte vermieden. Die erste Rampenscheibe 24 ist drehbar gelagert und stützt sich an einer feststehenden Rampenscheibe 25 ab. Zwischen den Rampenscheiben 24, 25 sind Rollkörper 26 angeordnet. Die Rollkörper 26 rollen sich auf gegenüber den Stirnseiten der Rampenscheiben 24, 25 geneigten Nuten 27 ab, so dass die Rampenscheiben 24, 25 mit zunehmendem Verdrehwinkel axial auseinander bewegt werden. Dabei stützt sich eine der Rampenscheiben 25 an dem einen Druckstück 12 und die andere der Rampenscheiben über ein Axiallager 33 an der Achse 20 und damit mittelbar an dem anderen Druckstück 13 ab. Die Druckstücke 12, 13 sind über Axialführungen 34 axial verschieblich und unverdrehbar mit dem Gehäuse 11 verbunden. Das eine Druckstück 12 kann einstückig mit der nächsten Rampenscheibe 25 gefertigt sein. Die Achse 20 hat eine Verdrehsicherung 42 in dem einen Druckstück 13. Die Mitnehmer 21, 22 sind derart gestaltet, dass sie in der einen Drehrichtung der Antriebshülse 18 die Rastscheibe 23 verdrehen und in der anderen Drehrichtung der Antriebshülse 18 die drehbar gelagerte Rampenscheibe 24 verdrehen. Damit erfüllen die Mitnehmer 21, 22 in der einen Drehrichtung der Antriebshülse 18 eine Antriebsfunktion und in der anderen Drehrichtung eine Freilauffunktion mit dem Bauteil der Rastscheibe 23 oder der drehbaren Rampenscheibe 24.

Die Rastscheibe 23 ist Teil der Nachstelleinrichtung 15, welche eine Nachstellmutter 28 erfasst. Diese Nachstellmutter 28 stützt sich über eine Tellerfeder 29 an dem einen Druckstück 13 ab und ist auf einem Nachstellgewinde 30 der Achse 20 aufgedreht. Die Rastscheibe 23 und die Nachstellmutter 28 haben einander gegenüberstehende Rasterungen 31, so dass die Nachstellmutter 28 in der einen Drehrichtung der Rastscheibe 23 mitgenommen und auf dem Nachstellgewinde 30 der Achse 20 verdreht und damit verschoben wird. Dabei drückt die Nachstellmutter 28 über die Tellerfeder 29 gegen das eine Druckstück 13. Bei einer Rückbewegung der Rastscheibe 23 verbleibt die Nachstellmutter 28 durch Reibschluss auf der Achse 20 und die Rastscheibe 23 bewegt sich eine Rasterung weiter. Hierdurch werden die Abstände der Druckstücke 12, 13 zueinander vergrößert und damit der Aktuator 6 nachgestellt.

Figur 4 verdeutlicht die Ausgestaltung des ersten Mitnehmers 21 am Beispiel der Rastscheibe 23. Die Rastscheibe 23 wird von einer Rückstellfeder 32 gegen einen Anschlag 43 vorgespannt. Der erste Mitnehmer liegt lose an der Rastscheibe 23 an und kann sich bei einer Drehung der Antriebshülse 18 im Urzeigersinn dieser entfernen oder bei einer Drehung gegen den Urzeigersinn diese Rastscheibe 23 gegen die Kraft der Rückstellfeder 32 verdrehen. Die zweiten Mitnehmer 22 zur Mitnahme der drehbaren Rampenscheibe 24 sind analog mit den Funktionen in entgegengesetzter Drehrichtung aufgebaut. Damit wird bei dem Antrieb der Antriebshülse 18 in die eine Drehrichtung ausschließlich die Nachstelleinrichtung 15 verstellt und in der anderen Drehrichtung ausschließlich die Druckstücke 12, 13 voneinander weg bewegt und damit über den Spreizaktor 14 die Spreizeinrichtung 7 angetrieben.

Wird die Nachstellung aktiviert, dreht sich die Rastscheibe 23 und nimmt die Nachstellmutter 28 mit. Die Nachstellmutter 28 wird auf der Achse 20 verschraubt und gegen die Tellerfeder 29 gedrückt. Die Tellerfeder 29 Druckt gegen das Druckstück 13. Das Druckstück 13 bewegt sich damit in die gleiche Richtung wie die Nachstellmutter 28. Dabei nimmt das Druckstück 13 die Rastscheibe 23 über eine Sicherungsscheibe 44 mit. Mit jeder Nachstellung verschiebt sich somit die Baugruppe der Nachstelleinrichtung 15. Da die Rastscheibe 23 bei der Nachstellung mit verschoben wird bleibt der Kontakt zwischen der Nachstellmutter 28 und der Rastscheibe 23 erhalten. Verschiebt sich die Nachstelleinrichtung 15, dann vergrößert sich auch der Abstand zwischen Antriebshülse 18 und der Rastscheibe 23.

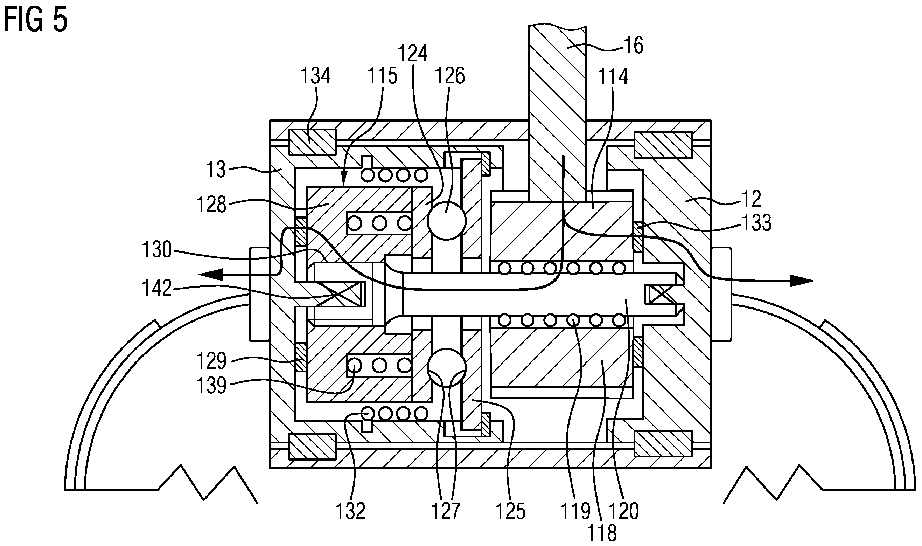

Figur 5 zeigt eine weitere Ausführungsform des Aktuators 6 mit zwei axial verschieblichen und über Axialführungen 134 in dem Gehäuse 11 unverdrehbar gehaltenen Druckstücken 12, 13 in einer schematischen Schnittdarstellung. Eine Nachstelleinrichtung 115 hat zwei einander gegenüberstehende Rampenscheiben 124, 125. Eine der Rampenscheiben 125 ist drehfest und axial verschieblich mit einem der Druckstücke 13 verbunden, während die andere der Rampenscheiben 124 über Reibung oder Formschluss mit einer Nachstellmutter 128 verbunden ist. Das Zahnrad 16 des Elektromotors 10 kämmt wie bei der Ausführungsform nach Figur 3 eine Antriebshülse 118. Die Antriebshülse 118 ist über ein als Kugelgewindetrieb ausgebildetes Gewinde 119 mit einer Achse 120 verbunden. Auf der Achse 120 ist die Nachstellmutter 128 mit einem Nachstellgewinde 130 aufgedreht.

Eine kräftige Nachstellfeder 139 im Inneren der Nachstellschraube 128 erzeugt eine axiale Kraft auf die Rampenscheibe 124, um dazwischen angeordnete, als Kugeln ausgebildete Rollkörper 126 zwischen den Rampenscheiben 124, 125 zu halten. Die drehfest mit dem einen Druckstück 13 verbundene Rampenscheibe 125 stützt die Kraft der Nachstellfeder 139 über eine Tellerfeder 129 am Druckstück 13 ab.

In der ungesteuerten Grundstellung sind die Rampenscheiben 124, 125 gegeneinander verdreht und in ihre Position vorgespannt. Die Nachstellfeder 139 im Inneren der Nachstellmutter 128 spannt die Rampenscheiben 124, 125 gegen die Rollkörper 126 vor. Die mit der Nachstellmutter 128 verbundene Rampenscheibe 124 ist durch Reibung in ihrer Drehstellung gehalten. Zusätzlich hält eine Rückstellfeder 132 die Rampenscheiben 124, 125 in ihrer verdrehten und vorgespannten Lage. Dabei ist die Rückstellfeder 132 in einer ungespannten Ruheposition. Eine axiale Verschiebung der Rampenscheiben 124, 125 führt zu einer Spannung der Drehfeder. Drückt nun die angetriebene Antriebshülse 118 des als Kugelgewindetrieb ausgebildeten Gewindes 119 gegen die Rampenscheibe 125, werden die Rampenscheiben 124, 125 verdreht und dabei axial zusammengedrückt und die Rückstellfeder 132 vorgespannt. Die axiale Kraft erzeugt so viel Reibkraft zwischen der einen Rampenscheibe 124 und der Nachstellmutter 128, dass die Nachstellmutter 128 verdreht wird, Nachstellhub erzeugt und so den Abstand zwischen den Druckstücken 12, 13 vergrößert.

Entfernt sich nun die angetriebene Antriebshülse 118 des als Kugelgewindetrieb ausgebildeten Gewindes 119 zurück in die dargestellte Grundstellung, nimmt die Reibung zwischen der Rampenscheibe 124 und der Nachstellmutter 128 wieder ab. Die vorgespannte Rückstellfeder 132 bewegt die drehbare Rampenscheibe 124 dabei wieder zurück. Eine gegebenenfalls künstlich erzeugte ausreichend hohe Reibung im Nachstellgewinde 130 sorgt dafür, dass während der Entspannung der Rückstellfeder 132 die Nachstellmutter 128 nicht zurückgestellt wird.

Wird die Antriebshülse 118 in der einen Drehrichtung angetrieben, verschiebt sich diese und drückt über ein Axiallager 133 auf das eine Druckstück 12. Das andere Druckstück 13 wird über die Achse 120 in die andere Richtung bewegt, ohne sich dabei zu drehen. Die Achse 120 hat eine Verdrehsicherung 142 in den Druckstücken 12, 13. Die Nachstelleinrichtung 115 wird bei dieser Bewegung nicht beeinflusst. Damit wird die in Figur 1 dargestellte Spreizeinrichtung 7 angetrieben. Zum Abbau der Spreizkraft wird die Antriebshülse 118 in die entgegengesetzte Richtung in die Grundstellung angetrieben.

Die Nachstellung erfolgt, wenn aus der Grundstellung die Antriebshülse 118 in die andere Drehrichtung in Richtung der Rampenscheiben 124, 125 angetrieben wird. Die angetriebene Antriebshülse 118 des als Kugelgewindetrieb ausgebildeten Gewindes 119 drückt axial. Wirkt eine axiale Kraft auf die verdrehgesicherte Rampenscheibe 125, wird die drehbare Rampenscheibe 124 über geneigte Nuten 127 und darin angeordnete Rollkörper 126 verdreht und nimmt über Reibung oder Formschluss die Nachstellmutter 128 mit. Dabei wird die Rückstellfeder 132 gespannt. Die Drehung der Nachstellmutter 128 führt zu einer axialen Verschiebung der verdrehgesicherten Achse 120 und damit zu einer Vergrößerung des Abstandes der Druckstücke 12, 13. Wird anschließend die Antriebshülse 118 in die Grundstellung zurückbewegt, werden die Rampenscheiben 124, 125 von der axialen Vorspannung der Antriebshülse 118 entlastet. Die aufgespannte Rückstellfeder 132 kann sich daher in die Ruhelage zurückstellen. Dabei nimmt die Rückstellfeder 132 die drehbare Rampenscheibe 124 mit, so dass beide Rampenscheiben 124, 125 erneut gegeneinander verdreht sind.

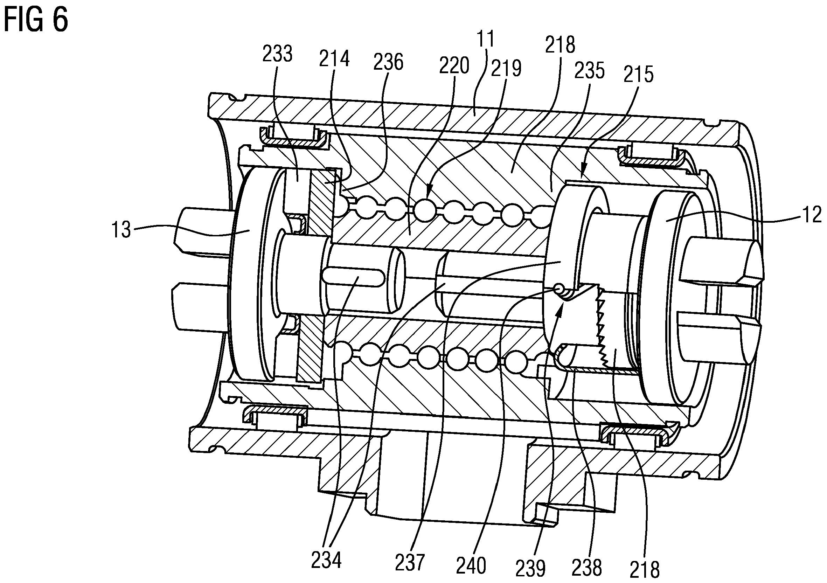

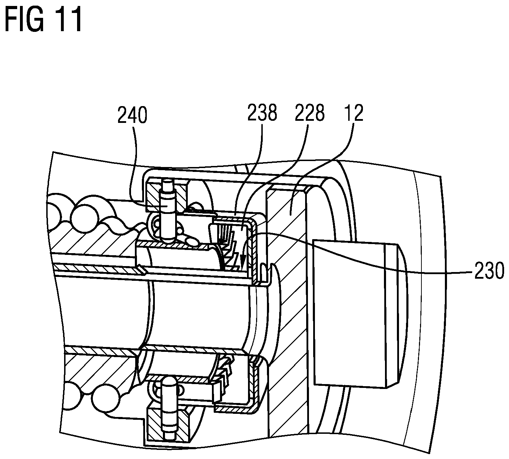

Figur 6 zeigt eine weitere Ausführungsform des Aktuators 6 der Bremseinrichtung aus Figur 1, bei der eine in dem Gehäuse 11 verdrehbare und von dem Elektromotor 10 über das Zahnrad 16 aus Figur 1 antreibbare Antriebshülse 218 über ein als Kugelgewindetrieb ausgebildetes Gewinde 219 auf einer rohrförmigen Achse 220 gelagert ist. Zwei innerhalb der Antriebshülse 218 angeordnete und gegenüber dieser verdrehbare Druckstücke 12, 13 werden von den Bremsorganen 2, 3 aus Figur 1 verdrehgesichert und von den ebenfalls in Figur 1 dargestellten Zugfedern 8, 9 in die Antriebshülse 218 hinein vorgespannt. Die rohrförmige Achse 220 hat Axialführungen 234 zur drehfesten und axial verschieblichen Führung der Druckstücke 12, 13. Zwischen dem einen Druckstück 13 und dem Ende der Achse 220 ist ein Axiallager 233 eines Spreizaktors 214 angeordnet, während eine Nachstelleinrichtung 215 zwischen dem anderem Druckstück 12 und der Achse 220 angeordnet ist. Zudem steht die Antriebshülse 218 mit radial nach innen weisenden Absätzen 235, 236 dem Axiallager 233 und der Nachstelleinrichtung 215 gegenüber. Die Nachstelleinrichtung 215 hat eine Nachstellmutter 228, einen Schiebering 237 und einen Nachstellkäfig 238. Die Nachstellmutter 228 ist auf einem in Figur 11 dargestellten Nachstellgewinde 230 des einen Druckstücks 12 aufgedreht. Eine Nachstellfeder 239 ist an einem Schieberingbolzen 240 umgelenkt. Der Schiebering 237 ist axial von dem Schieberingbolzen 240 geführt.

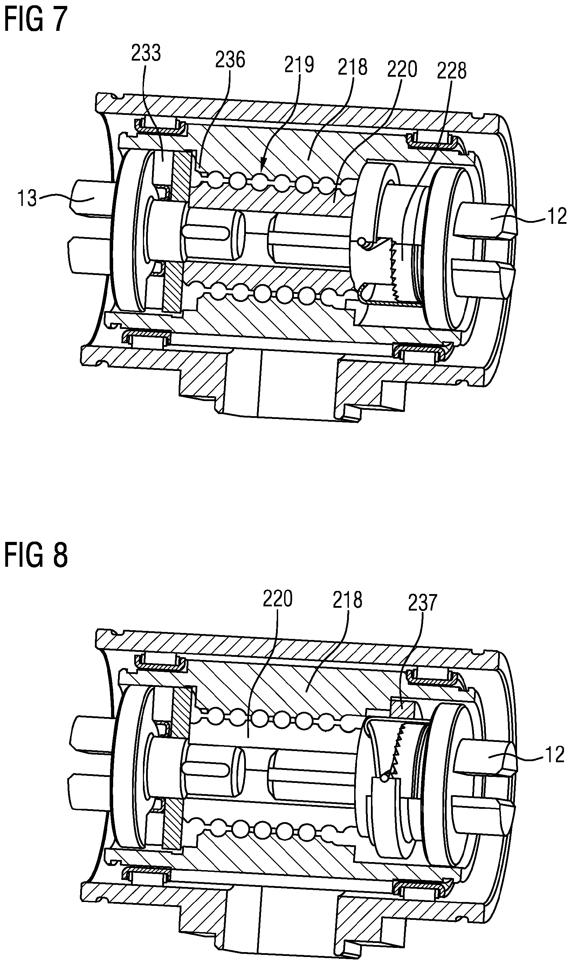

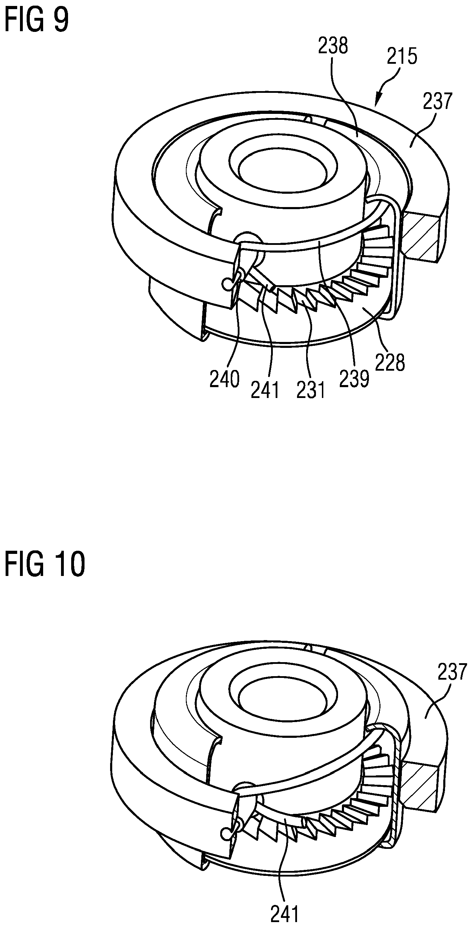

Zum Ansteuern des Spreizaktors 214 wird die Antriebshülse 218 durch den in Figur 1 dargestellten Elektromotor 10 verdreht, wie es in Figur 7 dargestellt ist. Durch die Drehbewegung wird die Achse 220 über das als Kugelgewindetrieb ausgebildete Gewinde 219 gegen die Nachstellmutter 228 gedrückt, wodurch das eine Druckstück 12 mit Kraft beaufschlagt wird. Auf der anderen Seite stützt sich die Antriebshülse 218 an dem Axiallager 233 ab, wodurch das andere Druckstück 13 mit Kraft beaufschlagt wird. Die Druckstücke 12, 13 treiben damit die Spreizeinrichtung 7 aus Figur 1 an. Die Nachstelleinrichtung 215 befindet sich in der dargestellten Position, die in Figur 9 zur Verdeutlichung vergrößert dargestellt ist. Ein Schenkel 241 der Nachstellfeder 239 stützt sich in einer Rasterung 231 der Nachstellmutter 228 ab, während das andere Ende der Nachstellfeder 239 an dem Nachstellkäfig 238 abgestützt wird.

Zum Ansteuern der Nachstelleinrichtung 215 wird die Antriebshülse 218 in die entgegengesetzte Richtung verdreht, wie es in Figur 8 dargestellt ist. Hierbei drückt die Antriebshülse 218 den Schiebering 237 axial in Richtung des nächsten Druckstücks 12. Durch die axial verschiebliche Koppelung des Schieberings 237 mit dem Schieberingbolzen 240 wird der Schenkel 241 der Nachstellfeder 239 um den Schieberingbolzen 240 verschwenkt, wie es in Figur 10 zur Verdeutlichung vergrößert dargestellt ist. Da sich das freie Ende des Schenkels 241 in der Rasterung 231 der Nachstellmutter 228 abstützt, wird diese verdreht. Wird die Antriebshülse 218 wieder in den Grundzustand zurückgedreht, verbleibt die Nachstellmutter 228 in ihrer Position, da sie durch Kraftschluss an der Achse 220 und an dem Nachstellgewinde 230 des Druckstücks 12 gehalten ist. Dieser Kraftschluss wird durch die in Figur 1 dargestellten Zugfedern 8, 9 unterstützt. Die Nachstellfeder 239 kann sich wieder entspannen und der freie Schenkel 241 kann durch den freigegebenen Weg wieder eine Rasterung in der Nachstellmutter 228 weiter bewegt werden.

Figur 11 zeigt den die Nachstellmutter 228 aufweisenden Teilbereich der Nachstelleinrichtung 215 in einem vergrößerten Teilschnitt. Der Nachstellkäfig 238 ist axial verschieblich und gegen eine Verdrehung gesichert in dem Druckstück 12 geführt. Durch diese Führung ist zudem der Schiebering 237 über den Schieberingbolzen 240 in dem Nachstellkäfig 238 axial verschieblich und gegen Verdrehung gesichert geführt.

## Patentansprüche

1. Trommelbremseinrichtung für ein Kraftfahrzeug, mit einem Bremsorgan (2, 3) zur Erzeugung eines Reibschlusses mit einem rotierenden Bauteil und mit einem in zwei Bewegungsrichtungen antreibbaren, das Bremsorgan (2, 3) auf das rotierende Bauteil zu und von dem rotierenden Bauteil weg bewegenden Aktuator (6), und mit einer Nachstelleinrichtung (15, 115, 215) zum Ausgleich eines Verschleißes der den Reibschluss erzeugenden Bauteile, **dadurch gekennzeichnet, dass** die Nachstelleinrichtung (15, 115, 215) in dem Bauteil des Aktuators (6) angeordnet ist und dass der Aktuator (6) ausgehend von einer mittleren Grundstellung in der einen Antriebsrichtung zum Antrieb eines Spreizaktors (14, 114, 214) und ausgehend von der Grundstellung in der entgegengesetzten Antriebsrichtung zum Antrieb der Nachstelleinrichtung (15, 115, 215) ausgebildet ist.

2. Trommelbremseinrichtung nach Anspruch 1, **dadurch gekennzeichnet, dass** die Grundstellung die mit Energie unbeaufschlagte Stellung des Aktuators (6) ist.

3. Trommelbremseinrichtung nach Anspruch 1 oder 2, **dadurch gekennzeichnet, dass** der Aktuator (6) einen Elektromotor (10) hat.

4. Trommelbremseinrichtung nach zumindest einem der Ansprüche 1 bis 3,
**dadurch gekennzeichnet, dass** der Aktuator (6) ein Gehäuse (11) mit darin angeordneten Druckstücken (12, 13) zur Abstützung der Bremsorgane (2, 3) und der Nachstelleinrichtung (15, 115, 215) hat.

5. Trommelbremseinrichtung nach zumindest einem der Ansprüche 3 oder 4,
**dadurch gekennzeichnet, dass** der Elektromotor (10) zum Antrieb einer Antriebshülse (18, 118, 218) ausgebildet ist, und dass die Antriebshülse (18, 118, 218) in der einen Drehrichtung zur Ansteuerung des Spreizaktors (14, 114, 214) und in der anderen Drehrichtung zur Ansteuerung der Nachstelleinrichtung (15, 115, 215) ausgebildet ist.

6. Trommelbremseinrichtung nach zumindest einem der Ansprüche 1 bis 5,
**dadurch gekennzeichnet, dass** der Spreizaktor (14, 114, 214) zwei gegeneinander verdrehbare Rampenscheiben (24, 25, 124, 125) hat, dass die Rampenscheiben (24, 25, 124, 125) mittelbar an den Druckstücken (12, 13) abgestützt sind, und dass die Form der Rampenscheiben (24, 25, 124, 125) bei einer Verdrehung gegeneinander zur ihrer axialen Vergrößerung ausgebildet sind.

7. Trommelbremseinrichtung nach zumindest einem der Ansprüche 5 oder 6,
**dadurch gekennzeichnet, dass** der Aktuator (6) eine, über ein Gewinde (119, 219) mit einer Achse (120, 220) verbundene und innerhalb des Gehäuses (11) axial verschiebbare Antriebshülse (118, 218) hat, und dass zumindest eines der Bauteile der Achse (120, 220) oder der Antriebshülse (118, 218) die Druckstücke (12, 13) mittelbar oder unmittelbar abstützt.

8. Trommelbremseinrichtung nach zumindest einem der Ansprüche 1 bis 7,
**dadurch gekennzeichnet, dass** die Nachstelleinrichtung (15, 115, 215) eine, über ein Nachstellgewinde (30, 130, 230) auf der Achse (20, 120, 220) aufgedrehte, Nachstellmutter (28, 128, 228) hat, und dass die Nachstellmutter (28, 128, 228) in der Grundstellung formschlüssig oder kraftschlüssig gegen Verdrehen gesichert ist.

9. Trommelbremseinrichtung nach zumindest einem der Ansprüche 7 bis 8,
**dadurch gekennzeichnet, dass** das Gewinde (119, 219) der Antriebshülse (118, 218) auf der Achse (120, 220) als Kugelgewindetrieb ausgebildet ist.

10. Trommelbremseinrichtung nach Anspruch 8,
**dadurch gekennzeichnet, dass** die Nachstellmutter (28, 128 228) im Kraftfluss zwischen der Achse (20, 120, 220) und dem einen Druckstück (12, 13) angeordnet ist.

11. Trommelbremseinrichtung nach zumindest einem der Ansprüche 8 und 10,
**dadurch gekennzeichnet, dass** die Nachstellmutter (28, 128, 228) eine Rasterung (31, 131, 231) mit einer Rastscheibe (23, 123) oder mit einer Nachstellfeder (239) hat.

12. Trommelbremseinrichtung nach zumindest einem der Ansprüche 8, 10 und 11,
**dadurchgekennzeichnet,** dass ein Nachstellkäfig (238) die Nachstellmutter (228) mit einem Ende umgreift, und mit dem anderen Ende die Nachstellfeder (239) abstützt.

## Claims

1. Drum brake device for a motor vehicle, with a brake member (2, 3) for producing a frictional connection to a rotating component, and with an actuator (6) which can be driven in two movement directions and moves the brake member (2, 3) towards the rotating component and away from the rotating component, and with an adjusting device (15, 115, 215) for compensating for wear of the components which produce the frictional connection, **characterized in that** the adjusting device (15, 115, 215) is arranged in the component of the actuator (6), and **in that** the actuator (6) is configured to drive a spreading actuator (14, 114, 214) in the one drive direction starting from a middle starting position, and to drive the adjusting device (15, 115, 215) in the opposite drive direction starting from the starting position.

2. Drum brake device according to Claim 1, **characterized in that** the starting position is that position of the actuator (6) in which it is not energized.

3. Drum brake device according to Claim 1 or 2, **characterized in that** the actuator (6) comprises an electric motor (10).

4. Drum brake device according to at least one of Claims 1 to 3, **characterized in that** the actuator (6) comprises a housing (11) with pressure pieces (12, 13) arranged therein for supporting the brake members (2, 3) and the adjusting device (15, 115, 215).

5. Drum brake device according to at least one of Claims 3 and 4,
**characterized in that** the electric motor (10) is configured to drive a drive sleeve (18, 118, 218), and **in that** the drive sleeve (18, 118, 218) is configured to actuate the spreading actuator (14, 114, 214) in the one rotational direction and to actuate the adjusting device (15, 115, 215) in the other rotational direction.

6. Drum brake device according to at least one of Claims 1 to 5, **characterized in that** the spreading actuator (14, 114, 214) comprises two ramp discs (24, 25, 124, 125) which can be rotated with respect to one another, **in that** the ramp discs (24, 25, 124, 125) are supported indirectly on the pressure pieces (12, 13), and **in that** the shapes of the ramp discs (24, 25, 124, 125) are configured for their axial enlargement in the case of a rotation with respect to one another.

7. Drum brake device according to at least one of Claims 5 and 6,
**characterized in that** the actuator (6) comprises a drive sleeve (118, 218) which is connected via a thread (119, 219) to an axle (120, 220) and is axially displaceable within the housing (11), and **in that** at least one of the components of the axle (120, 220) or the drive sleeve (118, 218) supports the pressure pieces (12, 13) indirectly or directly.

8. Drum brake device according to at least one of Claims 1 to 7, **characterized in that** the adjusting device (15, 115, 215) comprises an adjusting nut (28, 128, 228) which is screwed via an adjusting thread (30, 130, 230) onto the axle (20, 120, 220), and **in that** the adjusting nut (28, 128, 228) is secured in a positively locking or non-positive manner against rotation in the starting position.

9. Drum brake device according to at least one of Claims 7 and 8,
**characterized in that** the thread (119, 219) of the drive sleeve (118, 218) is configured on the axle (120, 220) as a ball screw drive.

10. Drum brake device according to Claim 8, **characterized in that** the adjusting nut (28, 128, 228) is arranged in the force flow between the axle (20, 120, 220) and the one pressure piece (12, 13).

11. Drum brake device according to at least one of Claims 8 and 10,
**characterized in that** the adjusting nut (28, 128, 228) comprises a latching means (31, 131, 231) with a latching disc (23, 123) or with an adjusting spring (239).

12. Drum brake device according to at least one of Claims 8, 10 and 11,
**characterized in that** an adjusting cage (238) engages around the adjusting nut (228) with one end, and supports the adjusting spring (239) with the other end.

## Revendications

1. Dispositif de frein à tambour pour un véhicule automobile, avec un organe de freinage (2, 3) pour produire un engagement par friction avec un composant rotatif et avec un actionneur (6) pouvant être entraîné dans deux directions de déplacement, rapprochant et éloignant l'organe de freinage (2, 3) du composant rotatif, et avec un dispositif de réajustement (15, 115, 215) pour compenser une usure des composants produisant l'engagement par friction, **caractérisé en ce que** le dispositif de réajustement (15, 115, 215) est agencé dans le composant de l'actionneur (6) et **en ce que** l'actionneur (6) est réalisé pour entraîner un actionneur d'écartement (14, 114, 214) en partant d'une position de base centrale dans l'une des directions d'entraînement et pour entraîner le dispositif de réajustement (15, 115, 215) en partant de la position de base dans la direction d'entraînement opposée.

2. Dispositif de frein à tambour selon la revendication 1, **caractérisé en ce que** la position de base est la position non alimentée en énergie de l'actionneur (6).

3. Dispositif de frein à tambour selon la revendication 1 ou 2, **caractérisé en ce que** l'actionneur (6) a un moteur électrique (10).

4. Dispositif de frein à tambour selon au moins l'une quelconque des revendications 1 à 3, **caractérisé en ce que** l'actionneur (6) a un boîtier (11) avec des pièces de pression (12, 13) agencées à l'intérieur pour supporter les organes de freinage (2, 3) et le dispositif de réajustement (15, 115, 215).

5. Dispositif de frein à tambour selon au moins l'une quelconque des revendications 3 ou 4, **caractérisé en ce que** le moteur électrique (10) est réalisé pour entraîner un manchon d'entraînement (18, 118, 218), et **en ce que** le manchon d'entraînement (18, 118, 218) est réalisé dans une direction de rotation pour commander l'actionneur d'écartement (14, 114, 214) et dans l'autre direction de rotation pour commander le dispositif de réajustement (15, 115, 215).

6. Dispositif de frein à tambour selon au moins l'une quelconque des revendications 1 à 5, **caractérisé en ce que** l'actionneur d'écartement (14, 114, 214) a deux disques en rampe (24, 25, 124, 125) pouvant tourner l'un par rapport à l'autre, **en ce que** les disques en rampe (24, 25, 124, 125) sont supportés indirectement par les pièces de pression (12, 13), et **en ce que** la forme des disques en rampe (24, 25, 124, 125), lorsqu'ils tournent l'un par rapport à l'autre, est réalisée pour leur agrandissement axial.

7. Dispositif de frein à tambour selon au moins l'une quelconque des revendications 5 ou 6, **caractérisé en ce que** l'actionneur (6) a un manchon d'entraînement (118, 218) relié à un essieu (120, 220) par un filetage (119, 219) et déplaçable axialement à l'intérieur du carter (11), et **en ce qu'**au moins l'un des composants de l'essieu (120, 220) ou du manchon d'entraînement (118, 218) supporte directement ou indirectement les pièces de pression (12, 13).

8. Dispositif de frein à tambour selon au moins l'une quelconque des revendications 1 à 7, **caractérisé en ce que** le dispositif de réajustement (15, 115, 215) a un écrou de réajustement (28, 128, 228) vissé sur l'essieu (20, 120, 220) par l'intermédiaire d'un filetage de réajustement (30, 130, 230), et **en ce que** l'écrou de réajustement (28, 128, 228) est bloqué en rotation dans la position de base par complémentarité de formes ou par adhérence.

9. Dispositif de frein à tambour selon au moins l'une quelconque des revendications 7 à 8, **caractérisé en ce que** le filetage (119, 219) du manchon d'entraînement (118, 218) sur l'essieu (120, 220) est réalisé sous forme de vis d'entraînement à billes.

10. Dispositif de frein à tambour selon la revendication 8, **caractérisé en ce que** l'écrou de réajustement (28, 128, 228) est agencé dans le flux de force entre l'essieu (20, 120, 220) et l'une des pièces de pression (12, 13).

11. Dispositif de frein à tambour selon au moins l'une quelconque des revendications 8 et 10, **caractérisé en ce que** l'écrou de réajustement (28, 128, 228) a un cran (31, 131, 231) avec une rondelle d'arrêt (23, 123) ou avec un ressort de réajustement (239).

12. Dispositif de frein à tambour selon au moins l'une quelconque des revendications 8, 10 et 11, **caractérisé en ce qu'**une cage de réajustement (238) entoure l'écrou de réajustement (228) par une extrémité et supporte le ressort de réajustement (239) par l'autre extrémité.
